# EUROPÄISCHE PATENTSCHRIFT

(11) **EP 4 012 204 B1**
(45) Veröffentlichungstag und Bekanntmachung des Hinweises auf die Patenterteilung: **22.05.2024**
(21) Anmeldenummer: 21207547.7
(22) Anmeldetag: 10.11.2021
(51) Int. Cl.: F16B 37/04

(54) **BEFESTIGUNGSANORDNUNG UND VERWENDUNG EINER BEFESTIGUNGSANORDNUNG**
FASTENING ARRANGEMENT AND USE OF A FASTENING ARRANGEMENT
AGENCEMENT DE FIXATION ET UTILISATION D'UN AGENCEMENT DE FIXATION

(30) Priorität: 08.12.2020 DE 102020215474
(43) Veröffentlichungstag der Anmeldung: 15.06.2022
(73) Patentinhaber: VOLKSWAGEN AG, 38440 Wolfsburg (DE)
(72) Erfinder: Hellermann, Werner, 49170 Hagen a.T.W. (DE); Haberland, Tim, 38165 Lehre (DE)

(56) Entgegenhaltungen:
- DE-A1-102004 042 564
- JP-A- 2015 013 462
- US-A- 4 891 732
- US-A1- 2015 345 536
- US-A1- 2018 252 257
- US-B2- 9 114 449
- US-B2- 9 816 547

## Beschreibung

Die Erfindung betrifft eine Befestigungsanordnung und die Verwendung einer Befestigungsanordnung nach den Oberbegriffen der unabhängigen Ansprüche.

Befestigungsanordnungen der in Rede stehenden Art dienen dazu, die Befestigung eines Gegenstands an einem Blech mittels einer Käfigmutter zu ermöglichen.

Bleche als Werkstoffe werden, insbesondere im Kraftfahrzeugbau, oftmals im Hinblick auf ihre Dicke optimiert ausgeführt. Dies bedeutet insbesondere, dass die Bleche gerade so dick ausgeführt werden, wie es notwendig ist, um gewünschte Konstruktionsziele im Hinblick auf Festigkeit und/oder Steifigkeit zu erfüllen, dabei allerdings ein möglichst geringes Gewicht der resultierenden Blechkonstruktion in Kauf nehmen zu müssen. Dies hat zur Folge, dass Bleche oftmals zu dünn sind, als dass Schrauben direkt in die Bleche eingedreht werden können, um andere Bauteile mit diesen Blechen zu verbinden.

Dieses Problem kann nach dem Stand der Technik durch sogenannte Käfigmuttern gelöst werden. Käfigmuttern bieten den Vorteil, dass dadurch, dass sich die Mutter im Käfig bewegen kann, ein Toleranzausgleich ermöglicht wird. Käfigmuttern der in Rede stehenden Art weisen einen Käfig auf. In diesem Käfig ist eine Mutter verdrehsicher aufgenommen. Der Käfig kann derart an einem Blech befestigt werden, dass eine Schraube durch eine Öffnung in dem Blech hindurch die Mutter eingeschraubt werden kann. Die durch die Schraube in die Mutter eingeleiteten Kräfte werden hierbei über den Käfig auf das Blech übertragen. Dabei ist es nicht erforderlich, dass die Käfigmutter während des Einschraubens der Schraube zugänglich ist. Hierdurch kann eine Käfigmutter auch da eingesetzt werden, wo eine konventionelle Mutter, die beim Festziehen der Schraube typischerweise das Gegenhalten mit einem geeigneten Werkzeug erfordert, um zu verhindern, dass die Mutter sich "mitdreht", nicht eingesetzt werden kann. So kann beispielsweise mittels einer Blechkonstruktion ein Hohlraum gebildet werden, in dem Bleche miteinander verbunden werden. Eine Käfigmutter kann zuvor derart an einem der Bleche befestigt werden, dass sie sich nach dem Verbinden der Bleche unter Ausbildung des Hohlraums innerhalb dieses Hohlraumes befindet. Aufgrund der Tatsache, dass die Mutter verdrehsicher in dem Käfig aufgenommen ist, ist ein Einschrauben der Schraube in die Mutter dennoch möglich, auch wenn die Mutter durch ein Werkzeug in dem Hohlraum nicht mehr erreicht werden kann.

Nachteilig an den nach dem Stand der Technik bekannten Käfigmuttern ist jedoch, dass sich die Muttern in den Käfigen regelmäßig bewegen können, wenn die Käfigmuttern nicht zum Befestigen eines Bauteils an dem Blech genutzt werden. Dies kann beispielsweise bei der Verwendung von Käfigmuttern in Kraftfahrzeugen dazu führen, dass aufgrund der Bewegungen des Kraftfahrzeugs störende Klappergeräusche durch ungenutzte Käfigmuttern entstehen. Gerade bei Kraftfahrzeugen sind ungenutzte Käfigmuttern jedoch nicht ungewöhnlich. Abhängig von unterschiedlichen Ausstattungsvariationen der jeweiligen Kraftfahrzeuge kann es sein, dass Befestigungsanordnungen zum Verbinden von Bauteilen mit Blechen an unterschiedlichen Stellen der Blechstruktur des Kraftfahrzeugs benötigt oder nicht benötigt werden. In derartigen Fällen kann es günstig sein, an allen infrage kommenden Befestigungspunkten geeignete Befestigungsanordnungen vorzusehen, die dann je nach Bedarf genutzt werden oder ungenutzt bleiben.

Weitere Probleme können sich ergeben, wenn Oberflächenbehandlungen an den Blechteilen vorgenommen werden sollen, wie beispielsweise Lackierungen und/oder Hohlraumversiegelungen. Die Öffnungen, die durch die Befestigungsanordnungen der in Rede stehenden Art in den Blechteilen entstehen, können sich hierbei negativ auswirken, wenn Flüssigkeiten ungewollt durch diese Öffnungen hindurchtreten.

Neben den aus dem Stand der Technik bekannten "klassischen" Käfigmuttern sind beispielsweise auch Gewindemuttern bekannt, die in einem Käfig mittels kraftschlüssig eingebrachter Kunststoffelemente schwimmend gelagert sind. Derartige Käfigmuttern sind beispielsweise in der Patentschrift DE 195 33 138 C1 offenbart. Kunststoffelemente, die kraftschlüssig in dem Käfig sitzen, halten die Mutter auf Abstand zu dem Blech, sodass die Mutter quasi "freischwebend" in dem Käfig fixiert ist. Beim Einschrauben einer Schraube in die Mutter kann der Kraftschluss des die Mutter im Käfig fixierenden Kunststoffteils überwunden und so die Mutter im Käfig bewegt werden. Bei derartigen Gewindemuttern ist jedoch eine Verdrehsicherung der Mutter beim Eindrehen der Schraube nur bedingt gewährleistet.

Weiterhin offenbart die US 2018/0180086 A1 einen Clip zum Verbinden von Blechen mit Bauteilen, der ebenfalls nach dem Prinzip einer Käfigmutter gestaltet ist. Der Clip es jedoch vergleichsweise aufwändig und lediglich in Randbereichen von Blechen einsetzbar.

Aus US 9 816 547 B2 ist eine mehrkomponentige Schnappmutter mit einem schwenkbaren Mutterelement offenbart.

US 9 114 499 B2 offenbart eine Mutterplattenanordnung, bei red ein Mutterelement zwischen einem Widerlager und einem Dichtungsanordnung eingeklemmt ist.

Aus der DE 10 2004 042564 A1 ist eine als U-förmiges Klemmstück bezeichnete Schnappmutter bekannt, bei der ein Mutterelement durch zwei rundgebogen verlaufenden Spangen mit dem Klemmkörper verbunden ist.

US 2018/252257 A1 offenbart eine Mutterplattenanordnung mit einer Kafigmutter, bei der das Mutterlement durch eine Feder dämpfend gelagert wird und das Mutterelement durch eine nach innen gerichtete radiale Verjüngung der Käfigaußenwand gehalten werden kann.

JP 2015 013462 A offenbart eine Mutterplattenanordnung an einem tragbaren Arbeitsgerät, die ein Verlorengehen eines Mutterelements zur Befestigung eines Abdeckteils am Hauptkörper des Arbeitsgeräts verhindern soll.

Aus 2015/345536 A1 ist eine Käfigmutter bekannt, bei der eine Befestigung des Mutterelements im Käfig durch die Amme des Käfigs bewirkt wird.

US 4 891 732 A offenbart ein bei dem sich zwischen dem Mutterelement und dem zu befestigenden Bauteil eine Dichtund oder eine Folie aus einem dichtenden Material befindet, an welche die Mutter angedrückt wird.

Die Aufgabe der Erfindung ist es daher, eine Befestigungsanordnung mit einem Blech und einer Käfigmutter sowie eine Verwendung einer solchen Befestigungsanordnung aufzuzeigen, welche die Verwendung der einfachen, eingangs genannten Käfigmuttern ermöglicht und dabei einen wirksamen Klapperschutz und/oder eine Dichtwirkung ermöglicht.

Die Aufgabe wird gelöst durch eine Befestigungsanordnung und die Verwendung einer Befestigungsanordnung mit den Merkmalen der unabhängigen Ansprüche. Die Merkmale der abhängigen Ansprüche betreffen vorteilhafte Ausführungsformen.

Die erfindungsgemäße Befestigungsanordnung weist ein Blech und eine Käfigmutter auf. Die Käfigmutter wiederum weist einen Käfig und eine Mutter auf. Die Mutter ist in dem Käfig verdrehsicher aufgenommen. Der Käfig ist derart an dem Blech befestigt, dass eine Schraube durch eine Öffnung in dem Blech hindurch in die Mutter eingeschraubt werden kann.

Erfindungsgemäß ist vorgesehen, dass die Befestigungsanordnung ein Fixierelement zum Fixieren der Position der Mutter in dem Käfig aufweist. Durch das Fixierelement wird die Mutter mit einer in Richtung des Bleches gerichteten Kraft beaufschlagt. Durch die Kraft wird die Mutter an das Blech und/oder eine Verstärkungsplatte der Käfigmutter angedrückt.

Die Verwendung eines derartigen Fixierelementes hat den Vorteil, dass zum einen ein Klapperschutz gewährleistet wird. Dadurch, dass die Position der Mutter durch die Kraft, mit der die Mutter beaufschlagt wird, fixiert wird, kann sich die Mutter nicht mehr im Käfig bewegen und dadurch das Klappern erzeugen.

Ein weiterer Vorteil ist, dass durch das Andrücken der Mutter an die Verstärkungsplatte des Käfigs und/oder das Blech eine Dichtung zwischen der Mutter zum einen und dem Blech und/oder der Verstärkungsplatte des Käfigs zum anderen erzeugt werden kann. Diese kann beispielsweise verhindern, dass eine Flüssigkeit, beispielsweise beim Einbringen einer Hohlraumversiegelung in eine Kraftfahrzeugkarosserie, zwischen der Mutter und dem Blech und/oder der Verstärkungsplatte durchdringen kann.

Weiterhin kann die Gestaltung des Fixierelements in Abhängigkeit von der Gestaltung der Käfigmutter erfolgen. Mit anderen Worten ist es möglich, das Fixierelement an die zu verwendende Käfigmutter anzupassen. Hierdurch entsteht eine weitgehende Freiheit bei der Auswahl einer geeigneten Käfigmutter für die Bauteilverbindung. Dies ermöglicht insbesondere den Rückgriff auf standardisierte Käfigmuttern, was ebenfalls zur Kostenreduktion beiträgt. Das Fixierelement kann zum Aufbau der Kraft wenigstens einen elastischen Bereich aufweisen, der sich von einem zentralen Bereich des Fixierelements weg erstreckt und sich mit einer elastischen Vorspannung am Käfig abstützt. Die elastische Vorspannung kann insbesondere durch eine elastische Verformung des Fixierelements, insbesondere des wenigstens einen elastischen Bereichs des Fixierelements, bewirkt werden. Die elastische Verformung kann beispielsweise beim Verbinden des Fixierelements mit der Käfigmutter herbeigeführt werden. Die durch die elastische Verformung erzeugten Vorspannungen im Material des Fixierelements, insbesondere des elastischen Bereichs des Fixierelements, erzeugen so die Kraft, mit der die Mutter beaufschlagt wird.

Der wenigstens eine elastische Bereich kann nach Art einer Blattfeder gestaltet sein. Eine derartige Gestaltung führt zu einer guten elastischen Verformbarkeit des elastischen Bereichs und ermöglicht entsprechend eine einfache, mit der elastischen Verformung des wenigstens einen elastischen Bereichs einhergehende Montage des Fixierelements an der Käfigmutter.

Der wenigstens eine elastische Bereich kann einen Vorsprung zum Hintergreifen des Käfigs aufweisen. Der Vorsprung kann insbesondere im Bereich eines Endes des elastischen Bereichs angeordnet sein. Insbesondere handelt es sich um das Ende, welches sich von einem zentralen Bereich des Fixierelements, von dem sich der elastische Bereich weg erstreckt, weg weist. Der Vorsprung kann sich entlang eines Randbereichs bzw. einer Kante des elastischen Bereichs erstrecken. Der Vorsprung hintergreift vorteilhafterweise bei einer Befestigungsanordnung der in Rede stehenden Art den Käfig. Auf diese Weise kommt insbesondere eine Art "Clipsverbindung" zwischen dem Fixierelement und dem Käfig der Käfigmutter zustande. Der Vorsprung verhindert auf diese Weise insbesondere ein ungewolltes Lösen des Fixierelements, insbesondere verhindert der Vorsprung, dass sich der an dem Käfig abstützende elastische Bereich von dem Käfig löst. Ein derartiger ungewollter Lösevorgang könnte bildlich als ein "Abrutschen" des elastischen Bereichs von dem Käfig beschrieben werden. Dies kann durch einen entsprechenden Vorsprung verhindert werden.

Der wenigstens eine elastische Bereich kann sich ausgehend von dem zentralen Bereich des Fixierelements von diesem weg sowohl in radialer, als auch in zu dem Blech hin gerichteter Richtung erstrecken. Der sich hieraus ergebende "diagonale" Verlauf des wenigstens einen elastischen Bereichs ermöglicht es, den elastischen Bereich mit einer leichten Verformung zum Zentrum des Fixierelements hin in die Lage zu versetzen, eine nach innen gerichtete Kante des Käfigs zu hintergreifen. Durch den diagonalen Verlauf erzeugt der wenigstens eine elastische Bereich eine elastische Rückstellkraft, die sowohl auf das Blech zu, als auch zum Zentrum des Fixierelements hin gerichtet ist, und leitet diese über den zentralen Bereich in das Fixierelements ein. Insbesondere wenn eine Mehrzahl elastischer Bereiche um den Umfang des zentralen Bereichs des Fixierelements herum angeordnet ist, führen die ins Zentrum gerichteten elastischen Kräfte zu einer Zentrierung des Fixierelements und damit der Mutter und sorgen gleichzeitig für einen sicheren Halt des Fixierelements in dem Käfig, während die zum Blech hin gerichteten Komponente der elastischen Rückstellkräfte für die Beaufschlagung der Mutter mit einer zum Blech hingerichteten Kraft bewirken.

Es ist vorteilhaft, wenn das Fixierelement eine Mehrzahl elastischer Bereiche aufweist. Diese können insbesondere in Umfangsrichtung regelmäßig über den Umfang des zentralen Bereichs des Fixierelements verteilt sein und sich von diesem zentralen Bereich des Fixierelements weg erstrecken. Derartig können die elastischen Bereiche über den Umfang verteilt gleichmäßig verteilte Kräfte auf den zentralen Bereich des Fixierelements und damit wiederum auf die Mutter ausüben. Jeder elastische Bereich kann die vorstehend beschriebenen Merkmale des wenigstens einen elastischen Bereichs einzeln und/oder im Kombination miteinander aufweisen.

Das Fixierelement weist einen Dichtbereich zum Abdichten des Innengewindes der Mutter auf. Ein derartiger Dichtbereich kann das Eindringen einer Flüssigkeit in das Innengewinde der Mutter und insbesondere einen Durchtritt von Flüssigkeit durch die Mutter verhindern. In Zusammenspiel mit dem Andrücken der Mutter an das Blech und/oder die Verstärkungsplatte kann so mittels der Mutter auch die Öffnung in dem Blech dichtend verschlossen werden. Dies kann beispielsweise vorteilhaft sein, um einen Durchtritt von Flüssigkeiten durch die Öffnung in dem Blech, beispielsweise im Rahmen einer Hohlraumversiegelung, zu verhindern.

Der Dichtbereich kann als in das Innengewinde der Mutter eindringender Vorsprung gegenüber dem zentralen Bereich gestaltet sein. Eine derartige Gestaltung des Dichtbereichs hat insbesondere den Vorteil, dass er zudem eine mechanische Verbindung der Mutter mit dem Fixierelement ermöglicht. Hierfür kann der Dichtbereich, der insbesondere in das Innengewinde der Mutter eindringt, in radialer Richtung ein Übermaß bezogen auf den Innendurchmesser des Ihnen Gewindes der Mutter aufweisen. Hierdurch entsteht eine Übermaß- bzw. Presspassung zwischen dem Dichtbereich des Fixierelements und der Mutter und damit eine kraftschlüssige Verbindung zwischen Mutter und Fixierelement. Eine derartige Ausgestaltung trägt darüber hinaus zum sicheren Halt des Fixierelements an bzw. in der Käfigmutter bei.

Das Fixierelement kann einstückig ausgeführt sein. Die vorstehend beschriebenen Funktionalitäten des Fixierelements lassen sich mit einem einstückig ausgeführten Bauteil realisieren. Einstückige Bauteile sind kostengünstig in ihrer Herstellung, da sie nicht aus einer Mehrzahl von Elementen zusammengesetzt werden müssen.

Weiterhin kann es sich bei dem Fixierelement um ein Kunststoffteil handeln. Kunststoffteile lassen sich kostengünstig herstellen. Insbesondere ein einstückiges Kunststoffteil kann günstig in großen Mengen hergestellt werden. Beispielsweise kann das Kunststoffteil ein Kunststoffspritzgussteil sein. Es hat sich gezeigt, dass Kunststoffteile eine hinreichende Elastizität aufweisen, um die notwendige Kraft zu erzeugen und auf die Mutter auszuüben.

Die vorstehende beschriebene Befestigungsanordnung kann insbesondere in einem Kraftfahrzeug verwendet werden.

In diesem Zusammenhang ist es besonders vorteilhaft, wenn mittels des Fixierelements eine Abdichtung der Befestigungsanordnung gegen den Durchtritt von Flüssigkeiten durch die Öffnung im Blech im Rahmen einer Oberflächenbehandlung herbeigeführt wird.

Bei dieser Oberflächenbehandlung kann es sich beispielsweise um eine Lackierung, beispielsweise eine kathodische Tauchlackierung, handeln. Bei derartigen Lackierung wird die Karosserie des Kraftfahrzeugs in ein Tauchbad eingetaucht. Durch das Fixierelement kann eine Abdichtung erfolgen. Zudem kann ein gasdichter Verschluss, beispielsweise durch das Aufbringen einer zusätzlichen Kunststoffschicht, die die Öffnungen in dem Blech verschließt, wie beispielsweise eine Schicht aus Polyvinylchlorid, in einfacher Weise erzielt werden. Dies ist insbesondere dann sinnvoll, wenn eine Befestigungsanordnung vorgesehen ist, diese jedoch nicht genutzt werden soll.

Besonders vorteilhaft ist die Verwendung einer Befestigungsanordnung, wenn das Blech einen Nassraum von einem Trockenraum getrennt. Unter einem Trockenraum ist beispielsweise der Innenraum eines Kraftfahrzeugs zu verstehen, also ein Raum, in den bei der bestimmungsgemäßen Verwendung des Kraftfahrzeugs kein Wasser und/oder Staub eindringen soll. Bei einem Nassraum hingegen kann es sich insbesondere um einen Raum, beispielsweise ein Hohlraum, im Bereich des Unterbodens des Kraftfahrzeugs, handeln, in den bei bestimmungsgemäßer Verwendung des Kraftfahrzeugs durchaus Wasser in flüssiger Form eintritt, beispielsweise beim Befahren von nassen Fahrbahnen. Wird die Befestigungsanordnung nicht zur Befestigung eines Bauteils verwendet, so kann mittels des Fixierelements eine Abdichtung zwischen Trockenraum und Nassraum herbeigeführt werden. Darüber hinaus wird ein effizienter Klapperschutz gewährleistet. Wird hingegen die Befestigungsanordnung für die Befestigung eines Bauteils genutzt, so kann das Fixierelement in einfacher Weise aus der Käfigmutter herausgedrückt werden. Dies kann insbesondere auch von der von der Käfigmutter abgewandten Seite des Bleches aus erfolgen.

Besonders vorteilhaft ist die Dichtwirkung einer in Rede stehenden Befestigungsanordnung im Hinblick auf die Durchführung einer Oberflächenbehandlung in Gestalt einer Hohlraumversiegelung. Diese kann insbesondere mit einem Wachs durchgeführt werden. Dabei erfolgt die Hohlraumversiegelung insbesondere auf der Seite des Bleches, auf der sich die Käfigmutter befindet. Bei dem zu versiegelnden Hohlraum kann sich um einen Nassraum handeln.

Da das Fixierelement bzw. die Käfigmutter zur späteren Montage des Bauteils an der Käfigmutter nicht zugänglich sein muss, kann die Käfigmutter mit dem Fixierelement in dem Hohlraum angeordnet werden. Beim Durchführen der Hohlraumversiegelung, bei der es sich beispielsweise um das Eindringen eines Wachses in flüssiger Form in den Hohlraum handeln kann, verhindert die beschriebene Befestigungsanordnung den Durchtritt der für die Hohlraumversiegelung verwendeten Flüssigkeit durch die Öffnung in dem Blech. Bei einer späteren Montage eines Bauteils unter Nutzung der Befestigungsanordnung kann das Fixierelement, insbesondere mittels der in die Mutter eindringenden Schraube, aus der Käfigmutter herausgedrückt werden. Dabei kann das Fixierelement, insbesondere wenn es aus Kunststoff ausgeführt ist, in dem Hohlraum verbleiben. In diesem Zusammenhang ist es insbesondere vorteilhaft, wenn die Hohlraumversiegelung derart gestaltet ist, dass das Fixierelement an der auf gebrachten Hohlraumversiegelung anhaftet. Das Fixierelement kann so in dem Hohlraum verbleiben, ohne dass eine übermäßige und/oder störende Geräuschentwicklung durch das sich im Hohlraum bewegende Fixierelement zu befürchten ist. Aufgrund der geringen Masse, insbesondere wenn das Fixierelement aus Kunststoff ausgeführt ist, ist zum einen ein Anhaften an der Hohlraumversiegelung leicht möglich, weiterhin ist eine Geräuschentwicklung nicht oder zumindest nicht in einem störenden Ausmaß zu befürchten, wenn das Fixierelement nicht anhaftet und sich im Hohlraum bewegt.

Weitere praktische Ausführungsformen der Erfindung sind nachfolgend im Zusammenhang mit den Zeichnungen beschrieben. Es zeigen:
- Fig. 1: eine beispielhafte Verwendung einer beispielhaften Befestigungsanordnung,
- Fig. 2: eine schematische vergrößerte Darstellung der Befestigungsanordnung aus Figur 1,
- Fig. 3: eine schematische Darstellung des Entfernens des Fixierelements zur Nutzung der Befestigungsanordnung aus Fig. 1 für die Befestigung eines Bauteils,
- Fig. 4: eine schematische Darstellung der Versiegelung einer zur Montage nicht genutzten Befestigungsanordnung aus Fig. 1,
- Fig. 5: eine Detaildarstellung einer beispielhaften Käfigmutter mit Fixierelement einer beispielhaften Befestigungsanordnung,
- Fig. 6: eine perspektivische Detaildarstellung des Fixierelements aus Figur 5,
- Fig. 7: einen Schnitt durch die Käfigmutter mit Fixierelement aus Figur 5.

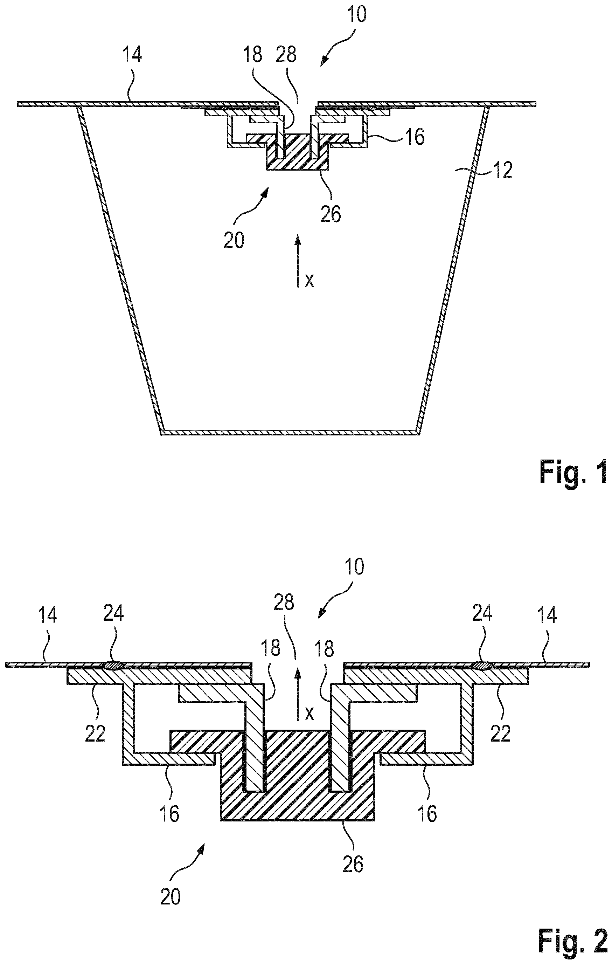

Figur 1 zeigt die beispielhafte Verwendung einer beispielhaften Befestigungsanordnung 10. Die Befestigungsanordnung 10 ist in dem gezeigten Beispiel in einem Hohlraum 12 angeordnet. Das Blech 14, an dem der Käfig 16 der Käfigmutter 20 befestigt ist, begrenzt den Hohlraum 12. Bei dem Hohlraum 12 kann es sich beispielsweise um einen Nassraum eines PKWs handeln. Auf der von dem Hohlraum 12 abgewandten Seite des Blechs 14 kann ein Trockenraum eines PKWs angeordnet sein.

Die Käfigmutter 20 kann wie im gezeigten Beispiel eine Mutter 18 aufweisen, die wie im gezeigten Beispiel als Flanschmutter ausgeführt sein kann. Weiterhin kann der Käfig 16 der Käfigmutter 20 eine Verstärkungsplatte 22 aufweisen. Dies ist insbesondere in den Figuren 1-4, 5 und 7 zu erkennen. Der Käfig 16 der Käfigmutter 20 kann wie im gezeigten Beispiel mit seiner Verstärkungsplatte 22 mit dem Blech 14 stoffschlüssig verbunden, insbesondere verschweißt, sein. In den Figuren 1-4 ist dies schematisch durch die Schweißverbindungen 24 dargestellt.

Durch das Fixierelement 26, welches in den Figuren 1-4 lediglich schematisch dargestellt ist, wird die Mutter 18 mit einer in Richtung des Bleches 14 bzw. der Richtung X gerichteten Kraft beaufschlagt. Durch diese Kraft wird die Mutter 18 gezeigten Beispiel an die Verstärkungsplatte 22 der Käfigmutter 20 angedrückt. Alternativ wäre aber auch denkbar, dass die Mutter 18 direkt an das Blech 14 angedrückt wird.

In der in Figur 1 dargestellten Anordnung kann so durch das Fixierelement 26 eine Abdichtung der Befestigungsanordnung 10 erfolgen. Insbesondere die Öffnung 28 in dem Blech 14 kann so mittels der Käfigmutter 20 mit dem Fixierelement 26 derart verschlossen werden, dass mittels des Fixierelements 26 eine Abdichtung der Befestigungsanordnung 10 gegen den Durchtritt von Flüssigkeiten durch die Öffnung 28 im Blech 14 herbeigeführt wird. Dies kann insbesondere während einer Hohlraumversiegelung des Hohlraums 12 genutzt werden.

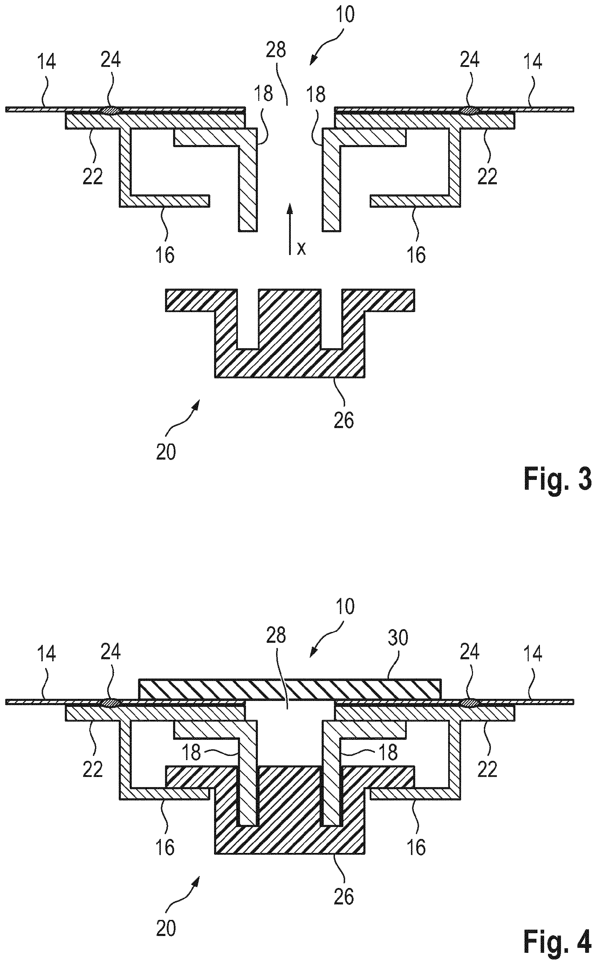

Soll die Befestigungsanordnung 10 zur Befestigung eines Bauteils benutzt werden, so kann, wie dies in Figur 3 dargestellt ist, das Fixierelement 26 von der Käfigmutter 20 entfernt werden. Die Mutter 18 ist dann im Käfig 16 vorzugsweise wieder voll beweglich. Auf diese Weise kann durch eine räumliche Verlagerung der Mutter 18, beispielsweise beim Eindrehen einer Schraube in die Mutter 18, ein Toleranzausgleich geschaffen werden.

Wenn die Befestigungsanordnung 10 nicht zum Befestigen eines Bauteils genutzt werden soll, so kann optional die Dichtwirkung, die durch das Fixierelement 26 herbeigeführt wird, noch verstärkt werden. Dies kann beispielsweise geschehen, indem eine Kunststoffschicht 30, bei der es sich beispielsweise um eine Schicht aus Polyvinylchlorid handeln kann, die Öffnung 28 bedeckend auf das Blech 14 aufgebracht wird. Hierdurch kann eine gasdichte Abdichtung erreicht werden. Das Aufbringen der Kunststoffschicht 30 kann, beispielsweise im Rahmen eines Lackierungsprozesses, automatisiert erfolgen.

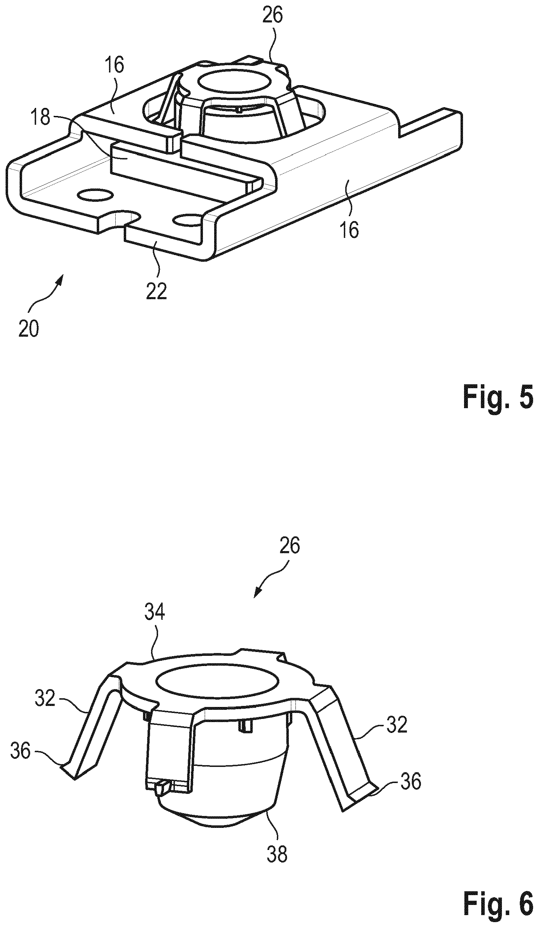

In Figur 5 ist eine Käfigmutter 20 mit daran befestigtem Fixierelement 26 im Detail dargestellt. Die beispielhaft dargestellte Käfigmutter 20 weist einen Käfig 16 auf, an dem eine Grundplatte 22 ausgebildet ist. Diese kann, beispielsweise mittels eines Schweißverfahrens, an einem Blech 14 befestigt werden.

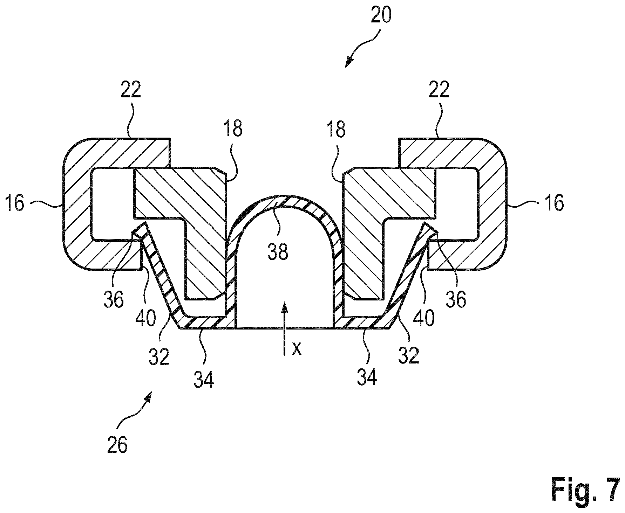

Das beispielhafte Fixierelement 26 aus Fig. 5 ist in der Figur 6 einzeln dargestellt. Das beispielhafte Fixierelement 26 weist zum Aufbau der Kraft, mit der die Mutter 18 beaufschlagt wird, eine Mehrzahl elastischer Bereiche 32 auf. Die elastischen Bereiche 32 erstrecken sich ausgehend von einem zentralen Bereich 34 des Fixierelements 26 sowohl radial nach außen, als auch in Richtung X auf das Blech 14 zu (im montierten Zustand). Die elastischen Bereiche 32 weisen im gezeigten Beispiel jeweils einen Vorsprung 36 auf. Die Vorsprünge 36 können, wie dies insbesondere in Figur 7 dargestellt ist, Kanten 40 des Käfigs 16 hintergreifen und so eine Befestigung des Fixierelements 26 an dem Käfig 16 nach Art einer Clipsverbindung ermöglichen.

Wie im Beispiel gezeigt, weist das Fixierelement 26 einen Dichtbereich 38 zum Abdichten des Innengewindes der Mutter 18 auf. Dieser kann, wie im gezeigten Beispiel, ein Vorsprung gegenüber dem zentralen Bereich 34 sein, der in das Innengewinde der Mutter 18 eindringt. Wie schematisch dargestellt, kann der Dichtbereich 38 in radialer Richtung ein Übermaß bezogen auf den Innendurchmesser des Innengewindes der Mutter 18 aufweisen.

Wie im gezeigten Beispiel kann das Fixierelement 26 als einstückiges Teil, insbesondere als einstückiges Kunststoffteil, ausgeführt sein.

Die Erfindung kann im Rahmen der Ansprüche und unter Berücksichtigung der Kenntnisse des zuständigen Fachmanns variiert werden.

### Bezugszeichenliste

- 10: Befestigungsanordnung
- 12: Hohlraum
- 14: Blech
- 16: Käfig
- 18: Mutter
- 20: Käfigmutter
- 22: Verstärkungsplatte
- 24: Schweißverbindungen
- 26: Fixierelement
- 28: Öffnung
- 30: Kunststoffschicht
- 32: elastischer Bereich
- 34: zentraler Bereich
- 36: Vorsprung
- 38: Dichtbereich
- 40: Kanten

- X: Richtung

## Patentansprüche

1. Befestigungsanordnung (10) mit einem Blech (14) und einer Käfigmutter (20),
wobei die Käfigmutter (20) einen Käfig (16) und eine in dem Käfig (16) verdrehsicher aufgenommene Mutter (18) aufweist, wobei der Käfig (16) derart an dem Blech (14) befestigt ist, dass eine Schraube durch eine Öffnung (28) in dem Blech (14) hindurch in die Mutter (18) engeschraubt werden kann, wobei
die Befestigungsanordnung (10) ein Fixierelement (26) zum Fixieren der Position der Mutter (18) in dem Käfig (16) aufweist, durch das die Mutter (18) mit einer in Richtung des Bleches (14) gerichteten Kraft beaufschlagt wird, durch die die Mutter (18) an das Blech (14) und/oder eine Verstärkungsplatte (22) der Käfigmutter (20) angedrückt wird, **dadurch gekennzeichnet,**
**dass** das Fixierelement (26) einen Dichtbereich (38) zum Abdichten des Innengewindes der Mutter (18) aufweist.

2. Befestigungsanordnung (10) mit einem Blech (14) und einer Käfigmutter (20) nach einem der vorigen Ansprüche, **dadurch gekennzeichnet, dass** das das Fixierelement (26) zum Aufbau der Kraft wenigstens einen elastischen Bereich (32) aufweist, der sich von einem zentralen Bereich (34) des Fixierelements (26) weg erstreckt und sich mit einer elastischen Vorspannung am Käfig (16) abstützt.

3. Befestigungsanordnung (10) nach Anspruch 2, **dadurch gekennzeichnet, dass** der wenigstens eine elastische Bereich (32) nach Art einer Blattfeder gestaltet ist.

4. Befestigungsanordnung (10) nach einem der Ansprüche 2 oder 3, **dadurch gekennzeichnet, dass** der wenigstens eine elastische Bereich (32) einen Vorsprung (36) zum Hintergreifen des Käfigs (16) aufweist.

5. Befestigungsanordnung (10) nach einem der Ansprüche 2 bis 4, **dadurch gekennzeichnet, dass** der wenigstens eine elastische Bereich (32) sich von einem zentralen Bereich (34) des Fixierelements (26) ausgehend sowohl hin zu dem Blech (14) als auch in radialer Richtung von dem zentralen Bereich (34) weg erstreckt.

6. Befestigungsanordnung (10) nach einem der Ansprüche 2 bis 5, **dadurch gekennzeichnet, dass** das Fixierelement (26) eine Mehrzahl elastischer Bereiche (32) aufweist.

7. Befestigungsanordnung (10) nach einem der vorigen Ansprüche, **dadurch gekennzeichnet, dass** der Dichtbereich (38) als in das Innengewinde der Mutter (18) eindringender Vorsprung gegenüber dem zentralen Bereich (34) gestaltet ist.

8. Befestigungsanordnung (10) nach einem der vorigen Ansprüche, **dadurch gekennzeichnet, dass** das Fixierelement (26) ein einstückiges Kunststoffteil ist.

9. Verwendung einer Befestigungsanordnung (10) mit einem Blech (14) und einer Käfigmutter (20), wobei die Käfigmutter (20) einen Käfig (16) und eine in dem Käfig (16) verdrehsicher aufgenommene Mutter (18) aufweist, wobei der Käfig (16) derart an dem Blech (14) befestigt ist, dass eine Schraube durch eine Öffnung (28) in dem Blech (14) hindurch in die Mutter (18) engeschraubt werden kann, wobei die Befestigungsanordnung (10) ein Fixierelement (26) zum Fixieren der Position der Mutter (18) in dem Käfig (16) aufweist, durch das die Mutter (18) mit einer in Richtung des Bleches (14) gerichteten Kraft beaufschlagt wird, durch die die Mutter (18) an das Blech (14) und/oder eine Verstärkungsplatte (22) der Käfigmutter (20) angedrückt wird, insbesondere Befestigungsanordnung (10) nach einem der vorigen Ansprüche, in einem Kraftfahrzeug, **dadurch gekennzeichnet, dass** mittels des Fixierelements (26) eine Abdichtung der Befestigungsanordnung (10) gegen den Durchtritt von Flüssigkeiten durch die Öffnung (28) im Blech (14) im Rahmen einer Oberflächenbehandlung herbeigeführt wird.

## Claims

1. Fastening arrangement (10) having a metal sheet (14) and having a cage nut (20), wherein the cage nut (20) has a cage (16) and a nut (18) which is accommodated in a rotationally fixed manner in the cage (16), wherein the cage (16) is fastened to the metal sheet (14) in such a way that a screw can be screwed into the nut (18) through an opening (28) in the metal sheet (14), wherein
the fastening arrangement (10) has a fixing element (26) which serves for fixing the position of the nut (18) in the cage (16) and by way of which the nut (18) is subjected to a force directed in the direction of the metal sheet (14) that pushes the nut (18) against the metal sheet (14) and/or against a reinforcement plate (22) of the cage nut (20), **characterized**
**in that** the fixing element (26) has a sealing region (38) for sealing off the internal thread of the nut (18) .

2. Fastening arrangement (10) having a metal sheet (14) and having a cage nut (20) according to one of the preceding claims, **characterized in that**, for buildup of the force, the fixing element (26) has at least one elastic region (32) which extends away from a central region (34) of the fixing element (26) and which is supported against the cage (16) by way of an elastic preload.

3. Fastening arrangement (10) according to Claim 2, **characterized in that** the at least one elastic region (32) is designed in the manner of a leaf spring.

4. Fastening arrangement (10) according to either of Claims 2 and 3, **characterized in that** the at least one elastic region (32) has a projection (36) for engaging behind the cage (16).

5. Fastening arrangement (10) according to one of Claims 2 to 4, **characterized in that**, proceeding from a central region (34) of the fixing element (26), the at least one elastic region (32) extends away from the central region (34) both towards the metal sheet (14) and in a radial direction.

6. Fastening arrangement (10) according to one of Claims 2 to 5, **characterized in that** the fixing element (26) has a plurality of elastic regions (32) .

7. Fastening arrangement (10) according to one of the preceding claims, **characterized in that** the sealing region (38) is designed as a projection in relation to the central region (34), which projection penetrates into the internal thread of the nut (18).

8. Fastening arrangement (10) according to one of the preceding claims, **characterized in that** the fixing element (26) is a one-piece plastic part.

9. Use of a fastening arrangement (10) having a metal sheet (14) and having a cage nut (20), wherein the cage nut (20) has a cage (16) and a nut (18) which is accommodated in a rotationally fixed manner in the cage (16), wherein the cage (16) is fastened to the metal sheet (14) in such a way that a screw can be screwed into the nut (18) through an opening (28) in the metal sheet (14), wherein the fastening arrangement (10) has a fixing element (26) which serves for fixing the position of the nut (18) in the cage (16) and by way of which the nut (18) is subjected to a force directed in the direction of the metal sheet (14) that pushes the nut (18) against the metal sheet (14) and/or against a reinforcement plate (22) of the cage nut (20), in particular a fastening element (10) according to one of the preceding claims, in a motor vehicle, **characterized in that**, by means of the fixing element (26), sealing of the fastening arrangement (10) against passage of liquids through the opening (28) in the frame (14) in the course of a surface treatment is effected.

## Revendications

1. Agencement de fixation (10) comportant une tôle (14) et un écrou à cage (20),
l'écrou à cage (20) présentant une cage (16) et un écrou (18) logé de manière bloquée en rotation dans la cage (16), la cage (16) étant fixée à la tôle (14) de telle sorte qu'une vis peut être vissée dans l'écrou (18) à travers une ouverture (28) dans la tôle (14), l'agencement de fixation (10) présentant un élément de blocage (26) servant au blocage de la position de l'écrou (18) dans la cage (16), élément de blocage par le biais duquel l'écrou (18) est soumis à une force orientée en direction de la tôle (14), force par le biais de laquelle l'écrou (18) est pressé contre la tôle (14) et/ou une plaque de renforcement (22) de l'écrou à cage (20), **caractérisé en ce que**
l'élément de blocage (26) présente une région d'étanchéité (38) servant à réaliser l'étanchéité du filetage intérieur de l'écrou (18).

2. Agencement de fixation (10) comportant une tôle (14) et un écrou à cage (20) selon l'une des revendications précédentes, **caractérisé en ce que** l'élément de blocage (26) présente, pour la création de la force, au moins une région élastique (32) qui s'étend à partir d'une région centrale (34) de l'élément de blocage (26) en s'éloignant de celle-ci et s'appuie contre la cage (16) avec une précontrainte élastique.

3. Agencement de fixation (10) selon la revendication 2, **caractérisé en ce que** l'au moins une région élastique (32) est conçue à la manière d'un ressort à lame.

4. Agencement de fixation (10) selon l'une des revendications 2 ou 3, **caractérisé en ce que** l'au moins une région élastique (32) présente une saillie (36) destinée à venir en prise par l'arrière avec la cage (16) .

5. Agencement de fixation (10) selon l'une des revendications 2 à 4, **caractérisé en ce que** l'au moins une région élastique (32) s'étend à partir d'une région centrale (34) de l'élément de blocage (26) en s'éloignant de celle-ci, à la fois vers la tôle (14) et à partir de la région centrale (34) dans la direction radiale.

6. Agencement de fixation (10) selon l'une des revendications 2 à 5, **caractérisé en ce que** l'élément de blocage (26) présente une pluralité de régions élastiques (32) .

7. Agencement de fixation (10) selon l'une des revendications précédentes, **caractérisé en ce que** la région d'étanchéité (38) est conçue sous forme de saillie, pénétrant dans le filetage intérieur de l'écrou (18), par rapport à la région centrale (34).

8. Agencement de fixation (10) selon l'une des revendications précédentes, **caractérisé en ce que** l'élément de blocage (26) est une pièce en matière synthétique d'un seul tenant.

9. Utilisation d'un agencement de fixation (10) comportant une tôle (14) et un écrou à cage (20), l'écrou à cage (20) présentant une cage (16) et un écrou (18) logé de manière bloquée en rotation dans la cage (16), la cage (16) étant fixée à la tôle (14) de telle sorte qu'une vis peut être vissée dans l'écrou (18) à travers une ouverture (28) dans la tôle (14), l'agencement de fixation (10) présentant un élément de blocage (26) servant au blocage de la position de l'écrou (18) dans la cage (16), élément de blocage par le biais duquel l'écrou (18) est soumis à une force orientée en direction de la tôle (14), force par le biais de laquelle l'écrou (18) est pressé contre la tôle (14) et/ou une plaque de renforcement (22) de l'écrou à cage (20), en particulier agencement de fixation (10) selon l'une des revendications précédentes, dans un véhicule automobile, **caractérisé en ce qu'**une étanchéité de l'agencement de fixation (10) contre le passage de liquides à travers l'ouverture (28) dans la tôle (14) dans le cadre d'un traitement de surface est provoquée au moyen de l'élément de blocage (26).
